Europäisches Patentamt

European Patent Office

Office européen des brevets

(11) Publication number: **0 039 128**
**B1**

(12) **EUROPEAN PATENT SPECIFICATION**

(45) Date of publication of patent specification: **28.05.86**

(21) Application number: **81301140.0**

(22) Date of filing: **18.03.81**

(51) Int. Cl.⁴: **C 08 J 3/02** // C08L1/08, C08L5/00, C08L33/26, C08L71/02

(54) Water-soluble polymer suspensions.

(30) Priority: **07.04.80 US 138018**

(43) Date of publication of application:
**04.11.81 Bulletin 81/44**

(45) Publication of the grant of the patent:
**28.05.86 Bulletin 86/22**

(84) Designated Contracting States:
**BE DE FR GB NL SE**

(56) References cited:
**EP-A-0 002 368**
**EP-A-0 016 640**
**GB-A-1 397 933**
**US-A-3 894 879**

(73) Proprietor: **HERCULES INCORPORATED**
**Hercules Plaza**
**Wilmington Delaware 19899 (US)**

(72) Inventor: **Reid, Albert Richard**
**402 Foulk Road Brandywine Hundred Apts.**
**Wilmington Delaware 19803 (US)**

(74) Representative: **De Minvielle-Devaux, Ian Benedict Peter et al**
**CARPMAELS & RANSFORD 43, Bloomsbury Square**
**London WC1A 2RA (GB)**

Courier Press, Leamington Spa, England.

# 0 039 128

**Description**

This invention relates to the preparation of non-aqueous slurries of water soluble polymers. More specifically, it relates to the preparation of slurries of solid, particulate water soluble polymers which slurries are pumpable and which, when introduced into water, permit rapid, homogeneous dispersion of polymer particles followed by rapid dissolution thereof and rapid viscosity build-up to a high percentage of the ultimate attainable viscosity.

Water soluble polymers are widely used as thickeners, flow modifiers, fluid loss control agents, dispersing aids, and flocculants in many industries such as petroleum, mining, papermaking, textiles, and coatings. Many such polymers, however, are difficult to put into solution due to their tendency to hydrate so rapidly that the surfaces of the particles gel and the particles agglomerate. This gelling blocks the surface of the particles and prevents water from permeating throughout the particle to effect complete dissolution. To break up the surface gelled particles and clumps so that the entire particle can be hydrated and dissolved is a time consuming operation requiring expensive, heavy agitating equipment. The amount of agitation required, in addition to being time consuming and thus expensive, is also detrimental to the quality of the solution inasmuch as most water soluble polymers are shear sensitive and agitation reduces their molecular weight, resulting in loss of solution viscosity.

Several methods have been proposed to overcome the stated difficulties. The most commonly used method is to treat the surface of dry particles lightly with a crosslinking agent, sufficient to form a lightly crosslinked layer on the surface which will not gel, thus permitting water to penetrate into the interior of the particle following which the surface crosslinks are hydrolyzed slowly by the water and the entire particle is then able to be dissolved. While such techniques are very satisfactory in general, there are occasions when better techniques are needed. For example, hydrolysis of the cross links is frequently a pH sensitive reaction, so a product treated in this way is sometimes limited as to the environment in which it can be used. Moreover, some water-soluble polymers are not subject to any treatment of this type and dissolution of these must be carried out according to rigidly critical procedures.

It is the object of this invention to provide water-soluble polymers in a readily dispersible and readily soluble form. It is another object of this invention to develop a suspension of water-soluble polymers which is pumpable and from which polymer particles will disperse readily in water or aqueous salt solutions and dissolve rapidly to provide rapid build-up of solution viscosity. Yet another object is to provide water-soluble polymers in a form which is readily handled and easily metered.

In accordance with this invention, there are provided suspensions of water-soluble polymers, which comprise about 20 to 40% by weight of a particulate water-soluble polymer, a thickener, an organic liquid non solvent suspending medium and a surfactant, characterised by 0.3 to 1.5% by weight of an alcohol- and water-soluble thickener selected from high molecular weight hydroxypropyl cellulose, ethyl cellulose of D.S. 1.4 to 1.8, ethyl hydroxyethyl cellulose of ethyl D.S. approximately 1.5 and hydroxyethyl D.S. up to 0.5, and dihydroxypropyl hydroxypropyl cellulose of DHP M.S. 1.6 and HP M.S. 7.4, 60 to 80% by weight of an organic liquid nonsolvent suspending medium comprising a water immiscible aliphatic alcohol containing up to about 45% by weight of at least one liquid hydrocarbon, and 0% to 5% by weight of a surfactant having an HLB in an approximate range of 10 to 20. By D.S. is meant "degree of substitution"; by M.S. the "molar substitution". "HLB" is the measurement of the "hydrophilic lipophilic balance". Such suspensions are very stable, resisting settling of the polymer particles for a substantial period of time and are of a consistency to be readily pumpable. When these suspensions are added to water, the polymer particles disperse readily throughout the water and dissolve rapidly to form clear, smooth solutions.

The mixture of alcohol and hydrocarbon is advantageous for economic reasons. The upper limit of hydrocarbon is determined by the solubility of the alcohol-soluble thickener in the alcohol-hydrocarbon mixture, and should be about 45% by weight of alcohol-hydrocarbon mixture. Up to about 45% hydrocarbon, the stability of the dispersion is not affected by the presence of the hydrocarbon.

Any normally liquid, water-immiscible aliphatic alcohol, either branched or straight chain, can be employed as the suspending alcohol. Thus, there can be used hexanol, heptanol, octanol, nonanol or decanol in either branched or straight chain configurations as well as such cyclic alcohols as cyclohexanol and cyclopentanol.

The hydrocarbon portion can be any normally liquid, saturated or unsaturated aliphatic hydrocarbon, either straight or branched chain or cyclic, from $C_5$ through about $C_{17}$ or liquid aromatic hydrocarbons. The hydrocarbon can also be a mixture of such hydrocarbons and, in fact, for economic reasons will usually be such a mixture as mineral oil, kerosene, gasoline, No. 2 fuel oil or some similar hydrocarbon mixture.

The alcohol-soluble thickener is employed to maintain the polymer particles in suspension. The thickener is also water-soluble to ensure that it will not precipitate when the suspension is added to water. A highly preferred thickener is high molecular weight hydroxypropyl cellulose. Hydroxypropyl cellulose has an additional advantage in that it is generally compatible with most other water-soluble polymers in aqueous solutions. It is critical, however, that the hydroxypropyl cellulose be one of high molecular weight. Such a material is "Klucel H" (Registered Trade Mark) sold by Hercules Incorporated. Other alcohol-soluble thickeners which can be employed include ethyl cellulose of 1.4 to 1.8 D.S., ethyl hydroxyethyl cellulose of ethyl D.S. 1.5 and hydroxyethyl D.S. up to 0.5, and dihydroxypropyl hydroxypropyl cellulose DHP MS 1.6 and HP MS 7.4 (Example 7 of U.S. Patent 4,096,326).

2

The suspension can also contain up to about 5% by weight of a surfactant. The preferred surfactant concentration is about 0.2 to 3%. This surfactant, when used, serves the dual purpose of increasing the pumpability of the slurry and aiding in the dissolution of the water soluble polymer when the slurry is added to water.

Effective surfactants are those having HLB between about 10 and 20, which are effective for forming oil-in-water emulsions. Within the above limitations, substantially all classes of surfactants can be employed. Exemplary usable surfactants include ethoxylated polyol trioleates of HLB 11 (e.g., Atsurf 2822 by ICI); polyoxyethylene sorbitan stearate of HLB 14 to 15 (e.g., Tween 60 by ICI); polyoxyethylene sorbitan trioleate of HLB 11 (e.g., Tween 85 by ICI); polyoxyethylene lauryl alcohol of HLB 17 (e.g., Brij 35SP by ICI); and combinations of surfactants.

Pumpability of the slurry is increased by the surfactant by virtue of a reduced slurry viscosity. In the absence of a surfactant, pumpability becomes marginal at about 40% by weight of particulate water soluble polymer. Use of the surfactant improves pumpability of a 40% by weight slurry.

The second advantage gained by using a surfactant in the slurry is the improved polymer dissolution rate observed upon addition of the slurry to agitated water. While the polymer particles suspended in the liquid nonsolvent medium without a surfactant disperse in the water very readily, and ultimately dissolve to form clear solutions, they do not dissolve as rapidly as they do when the surfactant is present. Thus, within two minutes of charging into water, the polymer from a surfactant-free higher alcohol suspension may generate 50% of its ultimate viscosity, whereas from the same suspension containing a suitable surfactant, the polymer will usually generate at least 85% of its ultimate viscosity within two minutes.

The method of the invention is useful with all known water soluble, alcohol insoluble polymers. In particular, it is useful with the cellulose ethers such as hydroxyethyl cellulose (HEC), carboxymethyl cellulose (CMC) and carboxymethyl hydroxyethyl cellulose (CMHEC). Cellulose ethers of any substitution level within the water soluble range can be treated by the method of the invention. Other examples of water soluble polymers are polysaccharides such as xanthan gum, carageenan, pectin, and guar gum, derivatized polysaccharides such as hydroxyalkyl guar; acrylamide polymers and copolymers; and ethylene oxide polymers. Not all of these polymers are subject to the dispersibility problems discussed above. All, however, can benefit from being handled in the suspension form provided by this invention as this form constitutes an excellent way of handling and charging of the polymer into a solvent system at a metered rate.

In the examples which follow, parts and percentages are by weight unless otherwise specified. Viscosities are measured with a Brookfield Viscometer, using the #4 spindle at 30 r.p.m. When evaluating dispersibility and viscosity build-up, an amount of suspension sufficient to result in 1% polymer being present in the resultant solution was used. References to ultimate viscosity are to the viscosity measured 24 hours after adding the suspension to water. Some of the Examples are not within the invention as defined in the appended claims but are given to facilitate comparison.

Example 1

A 1% solution of high m.w. hydroxypropyl cellulose (M.S. 3.6) was prepared by slowly adding 0.4 part of the HPC to the vortex of 39.7 parts of vigorously agitated 2-ethyl-1-hexanol. Stirring was continued for four hours at a speed sufficient to effect adequate mixing without splashing. The solution was allowed to stand overnight and then stirred an additional two hours. A surfactant, 1.8 parts of an ethoxylated polyol trioleate of HLB 11 (Atsurf 2822 by ICI), was dissolved in 21.1 parts of deodorized kerosene. The two solutions were then combined and stirred for fifteen minutes.

The mixture was then agitated sufficiently vigorously to form a good vortex and 37 parts of granular hydroxyethyl cellulose (HEC—high molecular weight, 2.5 M.S.) was added slowly to the vortex. When all the HEC was added, agitation was continued until a uniform suspension was prepared.

No settling of the HEC was observed after the suspension had sat overnight. The viscosity of the suspension was 2200 mPa · s (cps).

The suspension dispersed well with no lumping when added to water. Within two minutes, the solution viscosity was 4600 mPa · s (cps.) or 84% of the ultimate viscosity of 5500 mPa · s (cps.) measured after 24 hours. The solution was smooth and clear.

When the same materials, omitting the surfactant, were employed in a suspension, dispersibility was again excellent, but the viscosity of the solution after two minutes was only 2365 mPa · s (cps.) or 39% of the 6000 mPa · s (cps.) measured after 24 hours. When the dry granular HEC, with no dispersibility treatment, was added to water, it lumped very badly, indicating poor dispersibility.

Example 2

A suspension which showed not settling on sitting for 72 hours was prepared, as in Example 1, consisting of 40 parts HEC, 38.8 parts 2-ethyl-1-hexanol thickened with 0.4 part of high molecular weight hydroxypropyl cellulose, 19 parts deodorized kerosene, and 1.8 parts Atsurf 2822 surfactant. This suspension had a viscosity of 4700 mPa · s (cps.).

Upon addition to water, dispersibility was excellent. Within two minutes a viscosity of 4860 mPa · s (cps.) was measured, which is 86% of the 24 hour viscosity of 5640 mPa · s (cps).

3

Examples 3 and 4

Example 2 was repeated using 40 parts HEC, 39.6 parts cyclohexanol, 0.4 part hydroxypropyl cellulose, and 20 parts deodorized kerosene with no surfactant. Dispersibility was excellent. The 2-minute viscosity was 4000 mPa·s (cps.) or 70% of the 24-hour viscosity (5700 mPa·s).

When n-hexanol was employed, dispersibility was excellent but the 2-minute viscosity (2730 mPa·s) was only 46% of the 24-hour viscosity (5900 mPa·s).

Examples 5—10

Example 4 was repeated except that the ratio of components was varied as shown in Table I. The decrease of suspension viscosity with decreasing HEC content is also shown.

TABLE I

Composition (% by wt.)

| Ex. # | HEC | HPC | Hexanol | Kerosene | Viscosity (mPa·s) (cps.) |
|---|---|---|---|---|---|
| 5 | 38 | 0.4 | 40.9 | 20.7 | 4800 |
| 6 | 37 | 0.4 | 41.6 | 21 | 3500 |
| 7 | 36 | 0.4 | 42.2 | 21.4 | 3000 |
| 8 | 35 | 0.4 | 42.9 | 21.7 | 2700 |
| 9 | 34 | 0.3 | 43.7 | 22 | 2400 |
| 10 | 33 | 0.3 | 44.4 | 22.3 | 2100 |

All of these suspensions were stable, and dispersed excellently in water and all dissolved rapidly.

Example 11

The procedure according to Example 8 was repeated except that a fibrous HEC was employed instead of the granular material. The results were similar except that the suspension viscosity was about 1200 mPa·s (cps.) greater than that experienced with the granular material.

Examples 12 and 13

A suspension was prepared by stirring 37 parts of HEC (high M.W.—2.5 M.S.) into 62.6 parts of n-hexanol thickened with 0.4 part of high molecular weight hydroxypropyl cellulose. No settling of the HEC was noted after sitting overnight. Viscosity of this suspension was 3500 mPa·s (cps.).

Similar results were observed with a suspension of 37 parts HEC in 62.6 parts cyclohexanol thickened with 0.4 part hydroxypropyl cellulose. A suspension with 2-ethyl-1-hexanol in place of n-hexanol gave similar results.

Example 14

Example 2 was repeated, using, as a surfactant, polyoxyethylene sorbitan trioleate ester of HLB 11 (Tween 85 by ICI). The suspension viscosity was 4400 mPa·s (cps.). No settling was observed on sitting overnight.

When added to water, the suspension had excellent dispersibility and no lumping was observed. The two minute viscosity in water was 5345 mPa·s (cps.) or 79% of the ultimate viscosity of 6800 mPa·s (cps.).

Example 15

Example 2 was repeated using a polyoxyethylene sorbitan stearate ester of HLB between 14 and 15 (Tween 60 by ICI). The suspension viscosity was 4700 mPa·s (cps.) and the suspension was stable with no settling overnight.

Upon being added to water, the dispersibility of the suspension was excellent. The two minute viscosity was 5405 mPa·s (cps.) or 82% of the ultimate viscosity of 6600 mPa·s (cps.).

Example 16

Example 2 was repeated using a polyoxyethylene lauryl alcohol of HLB about 17 (Brij 35 SP by ICI). Viscosity of this suspension was 4600 mPa·s (cps.) and there was no settling observed after overnight storage.

When added to water, the dispersibility of the suspension was excellent. The two minute viscosity was 5565 mPa·s (cps.) or 80% of the ultimate viscosity of 7000 mPa·s (cps.).

4

# 0 039 128

Example 17

Using the procedure described in Example 1, a slurry was prepared of a water soluble particulate carboxymethyl cellulose (CMC). This suspension had a viscosity of 1500 mPa · s (cps.). It separated only very slightly after overnight storage.

When added to water, dispersibility was excellent with no lumping observed. The two minute viscosity was 790 mPa · s (cps.) or 79% of the ultimate viscosity.

In contrast, the dry particulate CMC with no dispersibility treatment lumped excessively when added to water, indicating very poor dispersibility. The two minute viscosity was 380 mPa · s (cps.) or about 54% of the ultimate viscosity of 700 mPa · s (cps.).

When this example was repeated using the polyoxyethylene lauryl alcohol surfactant instead of the surfactant of Example 1, the suspension was more stable, with not settling being observed after 48 hours of storage. Suspension viscosity was 2900 cps. When added to water, no lumping was observed. The two minute viscosity was 795 mPa · s (cps.) or 79.5% of the ultimate viscosity.

Example 18

The procedure of Example 1 was repeated to prepare a suspension of a particulate carboxymethyl hydroxyethyl cellulose (carboxymethyl D.S. 0.4; hydroxyethyl M.S. 2). The suspension viscosity was 1600 mPa · s (cps.) and the suspension showed only slight settling after overnight storage. When added to water, no lumping was observed, indicating excellent dispersibility. The two minute viscosity was 1600 mPa · s (cps.) or 89% of the 24 hour viscosity.

Equally good results with regard to dispersibility and dissolving rate in water were obtained with the polyoxyethylene lauryl alcohol surfactant, an additional advantage was a more stable suspension which showed no settling after overnight storage.

Example 19

The procedure of Example 1 was repeated, using a water soluble particulate acrylamide sodium-acrylate copolymer as the suspended polymer and the polyoxyethylene lauryl alcohol surfactant. This suspension was stable and showed no separation or settling after 48 hours at room temperature. The suspension viscosity was 2800 mPa · s (cps.).

When adding the suspension to water, no lumping of the polymer was observed, indicating excellent dispersibility. The two minute viscosity was 4645 mPa · s (cps.) or 95% of the ultimate viscosity of 4900 mPa · s (cps.).

Example 20

Following the procedure of Example 1, a suspension of dry particulate hydroxypropyl guar was prepared. The suspension showed no settling or separation after overnight storage. The suspension viscosity was 1600 mPa · s (cps.). When added to water, no lumping was observed, indicating excellent dispersibility. The two minute viscosity was 89% of the ultimate viscosity of 3800 mPa · s (cps.).

Example 21

Example 1 was repeated using a glyoxal treated hydroxyethyl cellulose and the polyoxyethylene lauryl alcohol surfactant. The suspension was stable, showed no settling or separation after overnight storage. The suspension viscosity was 3000 mPa · s (cps.).

When adding the suspension to dilute sodium hydroxide solution at pH 12.5, no lumping was observed and the dispersibility in water was rated as excellent. The two minute viscosity build-up was 76% of the ultimate viscosity.

In comparison, when the dry particulate glyoxal treated hydroxyethyl cellulose was added to the dilute sodium hydroxide solution at pH 12.5, some lumping was observed and the two minute viscosity build-up was only 37% of the ultimate viscosity.

Example 22

Example 1 was repeated using toluene in place of deodorized kerosene, and polyoxyethylene lauryl alcohol surfactant. The suspension was stable, with no settling observed after a storage time of 48 hours. The suspension viscosity was 3100 mPa · s (cps.).

When the suspension was added to water, no lumping was observed and the dispersibility was excellent. The two minute viscosity build-up was 77% of the ultimate viscosity.

Example 23

Example 1 was repeated using Fractol A (Primol 205) a very high-boiling petroleum fraction, in place of deodorized kerosene, and polyoxyethylene lauryl alcohol surfactant. The suspension was stable, as no settling was observed after overnight storage. The suspension viscosity was 2200 mPa · s (cps.).

Dispersibility of the suspension in water was excellent, with no lumping being observed. The two minute viscosity build-up was 76% of the ultimate viscosity.

5

Example 24

Example 1 was repeated using 0.18 part polyoxyethylene lauryl alcohol surfactant with 37 parts HEC, 39.7 parts 2-ethyl-1-hexanol, 0.4 part hydroxypropyl cellulose, and 22.7 parts deodorized kerosene. The suspension was stable with no settling after overnight storage. Suspension viscosity was 2800 mPa · s (cps.).

When the suspension was dispersed in water, no lumping was observed and the dispersibility was rated as excellent. The two minute viscosity build-up was 93.5% of the ultimate viscosity.

Example 25

Example 1 was repeated replacing hydroxypropyl cellulose with dihydroxypropyl hydroxypropyl cellulose (DHPHPC) (described in Example 7 of U.S. patent 4,096,326) and using polyoxyethylene lauryl alcohol surfactant. The composition of the suspension was 37 parts HEC, 1.5 parts DHPHPC, 38.6% 2-ethyl-1-hexanol, 21.1 parts kerosene, 1.8 parts surfactant.

The suspension was stable after overnight storage with no settling observed. Suspension viscosity was 6800 mPa · s (cps.). When added to water, the dispersibility was excellent, with no lumping observed. The two minute viscosity was 5060 mPa · s (cps.) or 94% of the ultimate viscosity.

Example 26

Example 25 was repeated using 1.1 parts of DHPHPC (described in Example 7 of U.S. patent 4,096,326). Concentration of other components in the suspension were 37 parts HEC, 39.0 parts 2-ethyl-1-hexanol, 21.1 parts deodorized kerosene, 1.8 parts surfactant.

The suspension was stable after overnight storage, with no settling observed. Suspension viscosity was 4200 mPa · s (cps.).

The dispersibility was excellent, with no lumping observed when added to water. The two minute viscosity was 5040 mPa · s (cps.) or 93% of the ultimate viscosity of 5400 mPa · s (cps.).

Examples 27 to 39

Example 1 was repeated except that polyoxyethylene lauryl alcohol was employed, and the proportions of 2-ethyl-1-hexanol, deodorized kerosene and HPC were varied as shown in the Table II. The effect of these changes on suspension stability and viscosity are shown also.

TABLE II

| Example No. | Composition (% by weight) | | | | | % HPC in alcohol | Alcohol Hydrocarbon ratio | Suspension properties | |
|---|---|---|---|---|---|---|---|---|---|
| | HEC | HPC | 2-Ethyl 1-hexanol | Kerosene | Surfactant | | | Overnight stability[a] | Viscosity (mPa · s)(cps) |
| 27 | 37 | 0.2 | 61 | 0 | 1.8 | 0.3 | — | VSS | 600 |
| 28 | 37 | 0.2 | 39.7 | 21.1 | 1.8 | 0.5 | 1.88 | S | 200 |
| 29 | 37 | 0.4 | 39.7 | 21.1 | 1.8 | 1.0 | 1.88 | NS | 1600 |
| 30 | 37 | 0.3 | 38.5 | 22.6 | 1.8 | 0.8 | 1.70 | S | 400 |
| 31 | 37 | 0.6 | 38.5 | 22.6 | 1.8 | 1.6 | 1.70 | NS | 5000 |
| 32 | 37 | 0.3 | 36.7 | 24.7 | 1.8 | 0.8 | 1.49 | S | 200 |
| 33 | 37 | 0.6 | 36.7 | 24.7 | 1.8 | 1.6 | 1.49 | NS | 5200 |
| 34 | 37 | 0.3 | 35.1 | 26.1 | 1.8 | 0.85 | 1.34 | S | 300 |
| 35 | 37 | 0.6 | 35.1 | 26.1 | 1.8 | 1.7 | 1.34 | NS | 3800 |
| 36 | 37 | 0.3 | 33.3 | 27.8 | 1.8 | 0.9 | 1.18 | S | 200 |
| 37 | 37 | 0.6 | 33.3 | 27.8 | 1.8 | 1.8 | 1.18 | NS | 2400 |
| 38 | 37 | 0.6 | 30.6 | 30.6 | 1.8 | 2.0 | 1.00 | S | 600 |
| 39 | 37 | 0.6 | 27.5 | 33.7 | 1.8 | 2.2 | 0.82 | S | 200 |

[a] VSS—very slight settling
S—settling
NS—no settling

**0 039 128**

This data shows that the quantity of HPC thickener required for a stable suspension depends on the alcohol/hydrocarbon ratio. If the alcohol/hydrocarbon ratio is too low, even 2.2% HPC based on alcohol will not yield a stable suspension. On the other hand, as little as 0.3% HPC based on the alcohol will yield a suspension with good overnight stability (only very slight settling) in the absence of hydrocarbon.

TABLE III
Dispersibility and dissolving rate data

| Example No. | 27 | 31 | 33 | 35 | 37 | 38 |
|---|---|---|---|---|---|---|
| Dispersibility of suspension* | ⸻ Excellent no lumping ⸻ | | | | | |
| Two-minute viscosity buildup (% of ultimate viscosity) | 87 | 84 | 82 | 95 | 99 | 99* |

*Unstable suspensions were stirred to form a homogenous mixture prior to the dispersibility and dissolving rate test.

## Claims

1. A stable suspension comprising about 20 to 40% by weight of a particulate water-soluble polymer, a thickener, an organic liquid nonsolvent suspending medium and a surfactant, characterised in that the suspension comprises 0.3 to 1.5% by weight of an alcohol- and water-soluble thickener, selected from high molecular weight hydroxypropyl cellulose, ethyl cellulose of D.S. 1.4 to 1.8, ethyl hydroxyethyl cellulose of ethyl D.S. approximately 1.5 and hydroxyethyl D.S. up to 0.5, and dihydroxypropyl hydroxypropyl cellulose of DHP M.S. 1.6 and HP M.S. 7.4, 60 to 80% by weight of an organic liquid nonsolvent suspending medium comprising a water immiscible aliphatic alcohol containing up to about 45% by weight of at least one liquid hydrocarbon, and 0—5% by weight of a surfactant having an HLB in an approximate range of 10 to 20.

2. A stable suspension according to claim 1 wherein the water-soluble polymer is hydroxyethyl cellulose, carboxymethyl cellulose, carboxymethylhydroxyethyl cellulose, a polysaccharide, polyacrylamide or an acrylamide-sodium acrylate copolymer.

3. A stable suspension according to claim 1 or 2 wherein the water immiscible alcohol is hexanol, heptanol, octanol, nonanol, decanol, 2-ethyl-1-hexanol or cyclohexanol.

4. A stable suspension according to any of claims 1 to 3 wherein the alcohol- and water-soluble thickener is high molecular weight hydroxypropyl cellulose.

## Revendications

1. Suspension stable comprenant environ 20 à 40% en poids d'un polymère hydrosoluble sous forme de particules, un agent épaississant, un agent de suspension constitué par un liquide organique non solvant, et un agent tensioactif, caractérisé en ce que la suspension comprend de 0,3 à 1,5% en poids d'un agent épaississant hydrosoluble et soluble dans un alcool, choisi parmi l'hydroxypropylcellulose à haut poids moléculaire, l'éthyl cellulose ayant un degré de substitution de 1,4 à 1,8; l'éthylhydroxyéthylcellulose ayant un degré de substitution d'éthyle d'environ 1,5 et un degré de substitution d'hydroxyéthyle allant jusqu'à 0,5, et la dihydroxypropylhydroxypropylcellulose ayant une substitution molaire de DHP de 1,6 et une substitution molaire de HP de 7,4, de 60 à 80% en poids d'un agent de suspension constitué par un liquide organique non solvant comprenant un alcool aliphatique non miscible avec l'eau, contenant jusqu'à environ 45% en poids d'au moins un hydrocarbure liquide, et 0—5% en poids d'un agent tensio-actif ayant un HLB compris dans la gamme allant d'environ 10 à 20.

2. Suspension stable suivant la revendication 1 caractérisée en ce que le polymère hydrosoluble est l'hydroxyéthylcellulose, la carboxyméthylcellulose, la carboxyméthylhydroxyéthylcellulose, un polysaccharide, un polyacrylamide ou un copolymère acrylamide-acrylate de sodium.

3. Suspension stable suivant l'une quelconque des revendications 1 ou 2 caractérisée en ce que l'alcool non miscible à l'eau est l'hexanol, l'heptanol, l'octanol, le nonanol, le décanol, le 2-éthyl-1-hexanol ou le cyclohexanol.

4. Suspension stable suivant l'une quelconque des revendications 1 à 3 caractérisée en ce que l'agent épaississant hydrosoluble et soluble dans l'alcool est l'hydroxypropylcellulose à haut poids moléculaire.

## Patentansprüche

1. Stabile Suspension, enthaltend etwa 20 bis 40 Gew.-% eines teilchenförmigen wasserlöslichen Polymers, ein Verdickungsmittel, ein organisches flüssiges Nichtlösungsmittel als suspendierendes Medium und eine oberflächenaktive Verbindung, dadurch gekennzeichnet, daß die Suspension 0,3 bis 1,5 Gew.-% eines alkohol- und wasserlöslichen Verdickungsmittels, ausgewählt unter Hydroxypropylcellulose mit hohem Molekulargewicht, Ethylcellulose mit einem D.S. (Substitutionsgrad) von 1,4 bis 1,8,

8

**0 039 128**

Ethyl-Hydroxyethyl-Cellulose mit einem Ethyl-D.S. von etwa 1,5 und Hydroxyethyl-D.S. von bis zu 0,5 und Dihydroxypropyl-Hydroxypropyl-Cellulose mit einer DHP-M.S. (molare Substitution) von 1,6 und einer HP-M.S. von 7,4, 60 bis 80 Gew.-% eines organischen flüssigen Nichtlösungsmittels als suspendierendes Medium, das einen Wassernicht-mischbaren aliphatischen Alkohol enthält, der bis zu etwa 45 Gew.-% von mindestens einem flüssigen Kohlenwasserstoff enthält, und 0—5 Gew.-% einer oberflächenaktiven Verbindung mit einer HLB (hydrophilelipophile-Balance) in einem ungefähren Bereich von 10 bis 20 umfaßt.

2. Stabile Suspension nach Anspruch 1, worin das wasserlösliche Polymer Hydroxyethylcellulose, Carboxymethylcellulose, Carboxymethylhydroxyethylcellulose, ein Polysaccharid, Polyacrylamid oder ein Acrylamid-Natriumacrylat-Copolymer ist.

3. Stabile Suspension nach Anspruch 1 oder 2, worin der Wasser-nicht-mischbare Alkohol Hexanol, Heptanol, Octanol, Nonanol, Decanol, 2-Ethyl-1-hexanol oder Cyclohexanol ist.

4. Stabile Suspension nach einem der Ansprüche 1 bis 3, worin das alkohol- und wasserlösliche Verdickungsmittel Hydroxypropylcellulose mit hohem Molekulargewicht ist.

9